# EUROPEAN PATENT APPLICATION

(11) **EP 3 174 035 A1**
(43) Date of publication of application: **31.05.2017**
(21) Application number: 15824927.6
(22) Date of filing: 10.07.2015
(51) Int. Cl.: G09F 13/20, B60K 35/00, G01D 11/28, G09F 13/14

(54) **LIGHT-EMITTING DEVICE**

(30) Priority: 25.07.2014 JP 2014151511
(71) Applicant: Nippon Seiki Co., Ltd., Nagaoka-shi, Niigata 940-8580 (JP)
(72) Inventor: TAKAHASHI,Yasushi, Nagaoka Niigata (JP)
(74) Representative: Carpmaels & Ransford LLP
(86) International application number: PCT/JP2015/069841
(87) International publication number: WO 2016/013415

(57) **Abstract**

Provided is a light-emitting device that can suppress occurrences of brightness variations in light transmitting parts. The light-emitting device is provided with: a front surface panel (10) having a light transmitting part (11) extending along a virtual line (P); a plurality of light sources (30) disposed on a circuit board (20); a light guide member (40) disposed within a light path for illuminating light going from the light sources (30) to the light transmitting part (11); and a case body (50) having a space part (51) for accommodating the light sources (30) and the light guide member (40). In the case body (50) are provided light dividing parts (55) that divide a first illuminating light (L1) generated in the vicinity of the optical axis of the light sources (30) into a plurality of directions along the virtual line (P), and first reflecting parts (56) for reflecting a second illuminating light (L2) generated in a region away from the optical axis of the light sources (30) toward the light transmitting part (11). The light dividing parts (55) and the first reflecting parts (56) are disposed alternately along the virtual line (P), and the light sources (30) are disposed on the circuit board (20) so as to correspond to the light dividing parts (55).

## Description

### TECHNICAL FIELD

The present invention relates to a light-emitting device provided in a vehicle instrument mounted on, for example, an automobile, such as a car.

### BACKGROUND ART

Regarding this kind of light-emitting device, a light-emitting device described in, for example, Patent Literature 1 is conventionally known. The light-emitting device described in Patent Literature 1 is constituted by an ambient display built in an upper central portion of a vehicle instrument, and includes a resin-made front surface panel including a rectangular-shaped light transmitting portion extending along a predetermined virtual line (a virtual horizontal line), a plurality of green LEDs (light sources) mounted (disposed) at equal intervals along the virtual horizontal line on a circuit board to supply the light transmitting portion with illuminating light, a case body constituted by a light-shielding resin material disposed between the front surface panel and the circuit board to surround each green LED, and a control unit which performs lighting control of each green LED.

For example, if no abnormal condition (e.g., abnormal condition of an engine grid) has occurred, the control unit performs a process to lighten the green LEDs to notify a driver that no abnormal condition has occurred. Then the green LEDs are lit and the light transmitting portion are illuminated in green. The driver driving the automobile can instantaneously recognize that no abnormal condition has occurred by viewing the ambient display illuminated in green.

### CITATION LIST

### PATENT LITERATURE

Patent Literature 1: Japanese Patent Application Publication No. 2002-79847

### SUMMARY OF THE INVENTION

### PROBLEMS TO BE SOLVED BY THE INVENTION

In the light-emitting device like the ambient display described in Patent Literature 1, however, since a plurality of green LEDs (the light sources) are disposed at equal intervals immediately below (directly below) the light transmitting portion of the rectangular-shaped front surface panel, when the green LEDs are lit, parts of the light transmitting portion located immediately above the green LEDs are illuminated more brightly than parts of the light transmitting portion not located immediately above the green LEDs. Therefore, there is a problem that brightness variation occurs in the light transmitting portion which is illuminated upon reception of illuminating light from the green LEDs, and there is a room for further improvement in this regard.

To address the problem described above, an object of the present invention is to provide a light-emitting device which can reduce occurrence of brightness variation in a light transmitting portion.

### MEANS FOR SOLVING THE PROBLEMS

A light-emitting device according to the present invention, comprising: a front surface panel including a light transmitting portion extending along a predetermined virtual line; a plurality of light sources disposed on a circuit board along the virtual line in order to supply the light transmitting portion with illuminating light; a light guide member disposed within a light path for illuminating light going from the light sources to the light transmitting portion; and a case body including a space portion for accommodating the light sources and the light guide member, wherein the case body is provided with a light dividing portion that divides a first illuminating light emitted in the vicinity of an optical axis of the light source among illuminating light emitted from the light guide member into a plurality of directions along the virtual line, and a first reflecting portion for reflecting a second illuminating light emitted in a region away from the optical axis of the light source among the illuminating light emitted from the light guide member toward the light transmitting portion, and wherein the light dividing portion and the first reflecting portion are disposed alternately along the virtual line, and the light sources are disposed on the circuit board so as to correspond to the light dividing portion.

Further the light-emitting device according to the present invention, a second reflecting portion for reflecting third illuminating light that is illuminating light excluding the first and the second illuminating light from illuminating light emitted from the light guide member toward the light transmitting portion is provided between the light dividing portion and the first reflecting portion.

### EFFECT OF THE INVENTION

According to the present invention, an expected object can be attained and a light-emitting device which can reduce occurrence of brightness variation in a light transmitting portion can be provided.

### BRIEF DESCRIPTION OF THE DRAWINGS

[Fig. 1] Fig. 1 is a front view of a vehicle instrument including a light-emitting device in accordance with an embodiment of the present invention.
[Fig. 2] Fig. 2 is an exploded perspective view of the light-emitting device in accordance with the embodiment.
[Fig. 3] Fig. 3 is a front view of a case body in accordance with the embodiment.
[Fig. 4] Fig. 4 is a cross-sectional view along line A-A of Fig. 3.
[Fig. 5] Fig. 5 is a cross-sectional view along line B-B of Fig. 3.
[Fig. 6] Fig. 6 is a cross-sectional view along line C-C of Fig. 3.
[Fig. 7] Fig. 7 is a perspective view of the case body for describing light paths of first and second illuminating light in accordance with the embodiment.
[Fig. 8] Fig. 8 is a diagram illustrating a positional relationship between the case body and a light transmitting portion of a front surface panel in accordance with the embodiment.

### MODE FOR CARRYING OUT THE INVENTION

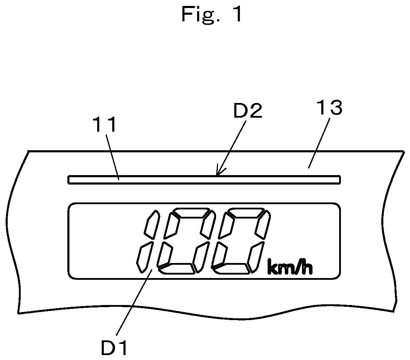

Hereinafter, an embodiment will be described with a case where a light-emitting device of the present invention is applied, for example, to a vehicle instrument mounted on an automobile with reference to Figs. 1 to 8.

In Fig. 1, a vehicle instrument has a configuration in which a liquid crystal display panel D1 for displaying various types of vehicle information, such as vehicle speed information, and a light-emitting device D2 are disposed in a vertical direction.

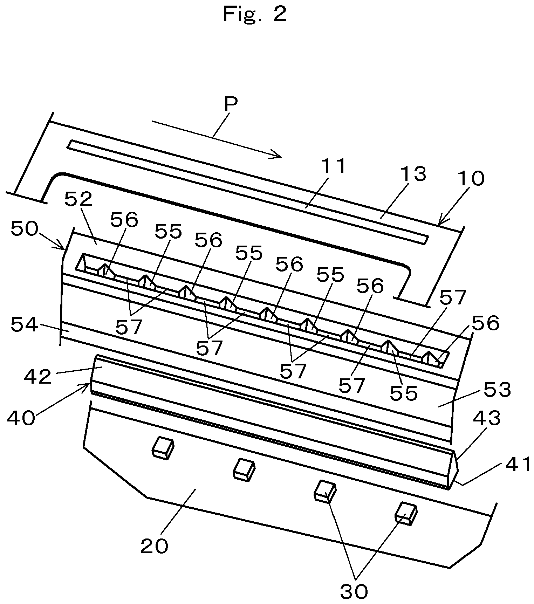

The light-emitting device D2 includes, as illustrated in Figs. 2 to 4, a front surface panel 10 including an rectangular-shaped (beltlike) light transmitting portion 11 extending along a virtual horizontal line P which is a predetermined virtual line, a circuit board 20 disposed on a back side of the front surface panel 10 to be substantially parallel with the front surface panel 10, a plurality of light sources 30 mounted (disposed) at equal intervals along the virtual horizontal line P on the circuit board 20 to supply the light transmitting portion 11 with illuminating light, a light guide member 40 disposed within a light path for illuminating light going from each of the light sources 30 to the light transmitting portion 11, and a case body 50 including a space portion 51 for accommodating each of the light sources 30 and the light guide member 40.

The front surface panel 10 includes a thin plate-shaped translucent substrate 12 constituted, for example, by polycarbonate, and a semitransmissive dark colored layer (a dark colored portion) 13 formed by printing on a surface of the translucent substrate 12. The front surface panel 10 is supported by the case body 50 so as to close an upper space portion T1 of the above-described space portion 51 located on the side of the front surface panel 10.

In this example, a portion of the front surface panel 10 (a portion of the dark colored layer 13) corresponding to (facing) the upper space portion T1 is the light transmitting portion 11 which can be illuminated upon receiving illuminating light. Although not illustrated in detail here, a light diffusion layer may be formed on the back surface of the translucent substrate 12 if needed.

The circuit board 20 is constituted by a hard wiring board on which a predetermined wiring pattern is formed, and is provided to close a lower space portion T2 of the space portion 51 on the side opposite to the side of the upper space portion T1. Each light source 30, a control means (not illustrated) constituted by a microcomputer which performs display control of the liquid crystal display panel D1 and light emission control of each light source 30, and various circuit components, such as a resistance and a condenser (not illustrated), are connected to the wiring pattern in a conductive state.

Each of the light sources 30 is constituted by a chip type light emitting diode (LED) which suitably emits color light (e.g., green light), and is mounted on a surface of the circuit board 20 at a position corresponding to the lower space portion T2. As each light source 30 here, a light source having light irradiation region angle with directivity of about 60 degrees in right and left directions about an optical axis, respectively, is employed. This means that the light irradiation region angle of each light source 30 is about 120 degrees.

The light guide member 40 is constituted by translucent synthetic resin, has a rectangular contour shape corresponding to a shape of the light transmitting portion 11, and is fixed and held by the case body 50 using an appropriate fixing means.

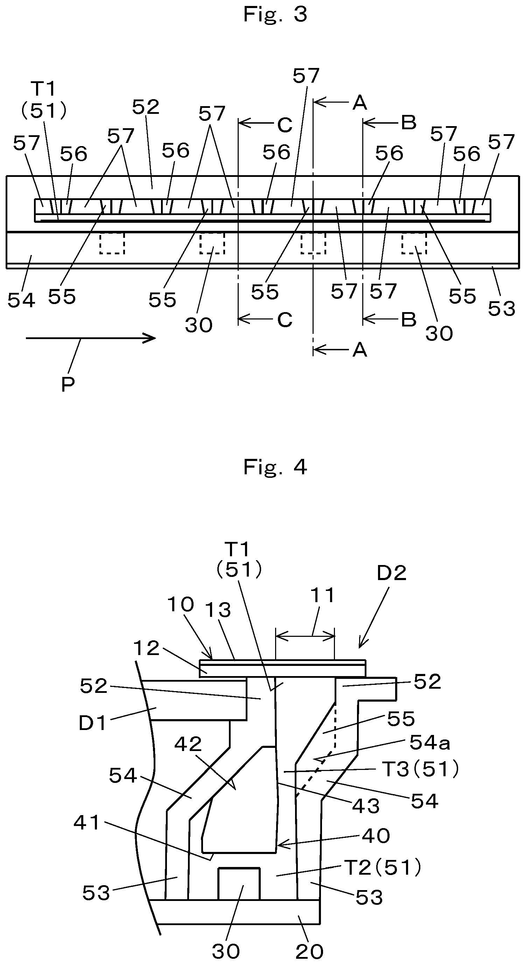

As illustrated in Fig. 4, the light guide member 40 has a substantially triangular shape in cross-section along a direction perpendicularly crossing the virtual horizontal line P. The light guide member 40 includes a photodetecting portion 41 which faces a light emitting surface of each light source 30 and receives illuminating light emitted from each light source 30, a reflective surface 42 formed in an inclined surface shape for reflecting illuminating light introduced in the light guide member 40 through the photodetecting portion 41 in a direction substantially perpendicularly crossing the virtual horizontal line P, and a light emitting portion 43 formed in a substantially stand wall surface shape for emitting the illuminating light reflected and guided by the reflective surface 42 toward a light dividing portion and a first and a second reflecting portions described later which are provided in the case body 50.

The case body 50 is constituted, for example, by a white synthetic resin material, and is disposed between the front surface panel 10 and the circuit board 20 to surround each light source 30 as illustrated in Figs. 3 and 4. The case body 50 has a configuration in which an upper case portion 52 surrounding the upper space portion T1, a lower case portion 53 surrounding the lower space portion T2, and an intermediate case portion 54 having a bent shape including an inclined space portion T3 which causes the upper space portion T1 and the lower space portion T2 to communicate with each other are formed in an integrated manner. The front surface panel 10 is supported by the upper case portion 52 and, the light guide member 40 is disposed to extend across the inclined space portion T3 and the lower space portion T2. Each light source 30 is mounted at a position on a surface of the circuit board 20 separated by a predetermined distance from immediately below the light transmitting portion 11 along a direction perpendicularly crossing the virtual horizontal line P.

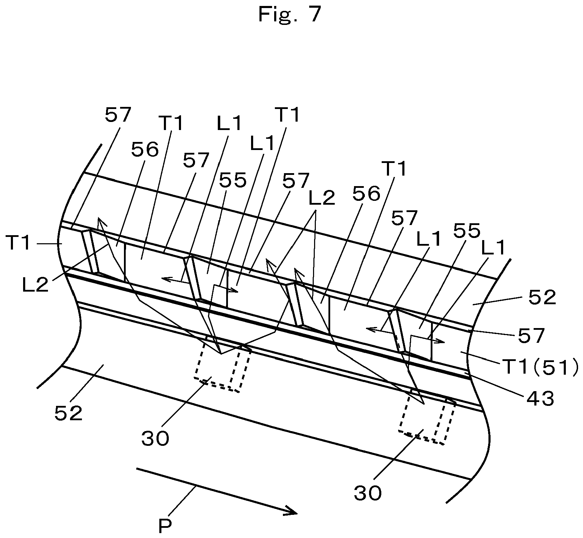

Here, in Figs. 4 and 7, the reference numeral 55 denotes a light dividing portion for dividing the first illuminating light L1 emitted in the vicinity of the optical axis of the light source 30 among illuminating light emitted from the light emitting portion 43 (the light guide member 40) into a plurality of directions (left and right directions) along the virtual horizontal line P. The light dividing portion 55 is provided in the case body 50.

More particularly, the light dividing portion 55 is formed as a rib for dividing light formed by raising a portion of an internal wall surface 54a of the intermediate case portion 54 facing the light emitting portion 43, i.e., a portion of the internal wall surface 54a corresponding to the position at which each light source 30 is disposed, toward the upper space portion T1. In this case, a cross-sectional shape of each light dividing portion 55 along the virtual horizontal line P is a substantially triangular shape (see Fig. 1).

As illustrated in Fig. 7, a part of straightly advancing strong light of the first illuminating light L1 emitted in the vicinity of the optical axis of the light source 30 among the illuminating light emitted from the light emitting portion 43 is divided into left and right directions along the virtual horizontal line P by the light dividing portion 55 and arrives at a later-described first reflecting portion provided in the case body 50. The first illuminating light L1 excluding the part of straightly advancing strong light described above goes directly above and arrives at the light transmitting portion 11 via the upper space portion T1.

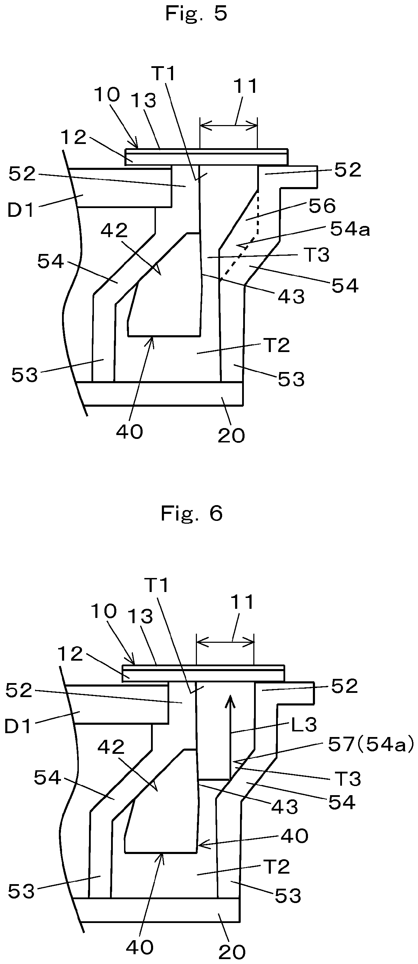

In Figs. 5 and 7, the reference numeral 56 denotes a first reflecting portion which reflects the second illuminating light L2 emitted in a region away from the optical axis of the light source 30 among the illuminating light emitted from the light emitting portion 43 (the light guide member 40) toward the light transmitting portion 11. A plurality of first reflecting portions 56 are provided in the case body 50, each of which is disposed at a substantially intermediate point on a line connecting adjacent light dividing portions 55 (along the virtual horizontal line P).

That is, in this example, the light dividing portions 55 and the first reflecting portions 56 are disposed alternately along the virtual horizontal line P, and each of the light sources 30 is mounted (disposed) corresponding to each light dividing portion 55 on the circuit board 20.

The first reflecting portion 56 is formed as a rib for controlling brightness formed by raising a portion of the internal wall surface 54a toward the upper space portion T1, and a contour shape of the first reflecting portion 56 is substantially the same as that of the light dividing portion 55.

The second illuminating light L2 with relatively weak light intensity emitted in a region away (separated) from the optical axis of the light source 30 among the illuminating light emitted from the light emitting portion 43 is reflected, respectively, at adjoining first reflecting portions 56 disposed with the light dividing portion 55 inserted therebetween as illustrated in Fig. 7, and the second illuminating light L2 reflected toward the front surface panel 10 by the first reflecting portion 56 arrives at the light transmitting portion 11 through the upper space portion T1.

In Fig. 6, the reference numeral 57 denotes a region of the internal wall surface 54a in which the light dividing portion 55 and the first reflecting portion 56 are not formed, and is a second reflecting portion for reflecting third illuminating light L3 which is a part of the illuminating light emitted from the light emitting portion 43 (the light guide member 40) excluding the first and the second illuminating lights L1 and L2 toward the light transmitting portion 11. The second reflecting portions 57 provided in the case body 50 are formed as a plurality of light reflecting surfaces of inclined shape each located between adjacent light dividing portion 55 and first reflecting portion 56.

The third illuminating light L3 excluding the first and the second illuminating lights L1 and L2 among the illuminating light emitted from the light emitting portion 43 is reflected by the second reflecting portion 57 provided between the light dividing portion 55 and the first reflecting portion 56, and arrives at the light transmitting portion 11 through the upper space portion T1.

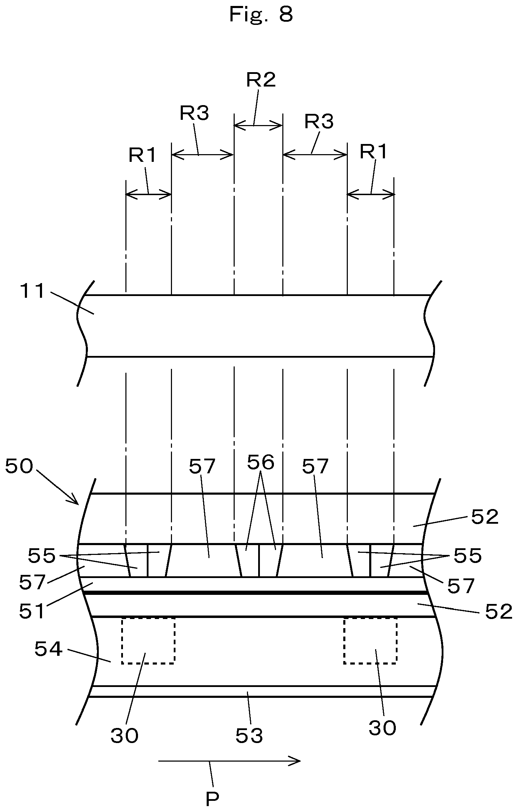

The light-emitting device D2 is constituted by each of the above-described portions. Next, a condition in which the light transmitting portion 11 as an ambient illuminating display unit emits light (in green) using the illuminating light from each light source 30 will be described. Fig. 8 is a diagram schematically illustrating a positional relationship (a correlation) between the light transmitting portion 11 and the case body 50. In the following description, a region of the light transmitting portion 11 corresponding to the light dividing portion 55 is defined as a first light transmission region R1, a region of the light transmitting portion 11 corresponding to the first reflecting portion 56 is defined as a second light transmission region R2, and a region of the light transmitting portion 11 corresponding to the second reflecting portion 57 is defined as a third light transmission region R3. The light transmitting portion 11 is constituted by a plurality of light transmission regions, i.e., the first to the third light transmission regions R1 to R3.

When each light source 30 is emitting light, the illuminating light emitted from each light source 30 is introduced in the light guide member 40 through the photodetecting portion 41, and is then emitted from the light emitting portion 43 via the reflective surface 42.

A part of straightly advancing strong light of the first illuminating light L1 among the illuminating light emitted from the light emitting portion 43 is divided by the light dividing portion 55 in a direction along the virtual horizontal line P, then is reflected toward the front surface panel 10 by a portion of the first reflecting portion 56 which adjoins (right and left of) the light dividing portion 55, and arrives at the second light transmission region R2 through the upper space portion T1 (see Figs. 7 and 8).

Further, the second illuminating light L2 with relatively weak light intensity emitted in a region away from the optical axis of the light source 30 among the illuminating light emitted from the light emitting portion 43 is reflected, respectively, on a portion of the first reflecting portion 56 as a rib for controlling brightness adjacent to the right and left of each light dividing portion 55, and arrives at the second light transmission region R2 through the upper space portion T1 (see Figs. 7 and 8).

Since a part of straightly advancing strong light of the first illuminating light L1 among the illuminating light emitted from the light emitting portion 43 is divided to the right and left by the light dividing portion 55, the first illuminating light L1 goes directly above in a state in which a light amount thereof is suppressed to some extent, and arrives at the first light transmission region R1 through the upper space portion T1.

The third illuminating light L3 among the illuminating light emitted from the light emitting portion 43 is light slightly separated from the optical axis of the light source 30, is reflected toward the front surface panel 10 by the second reflecting portion 57, and arrives at the third light transmission region R3 through the upper space portion T1.

In this case, since the light dividing portion 55 described above and each of the reflecting portions 56 and 57 are provided in the case body 50, an illuminating balance among the three light transmission regions, i.e., the first light transmission region R1 which is illuminated in a state not including the light divided by the light dividing portion 55, the second light transmission region R2 which is illuminated in a state in which a light amount is compensated for by a part of the first illuminating light L1 reflected via the light dividing portion 55 and the first reflecting portion 56 described above and the second illuminating light L2 emitted in the region away from the optical axis of the light source 30, and the third light transmission region R3 which is illuminated by the third illuminating light L3 reflected via the second reflecting portion 57, is kept favorably with no brightness variation. Therefore, occurrence of brightness variation in the light transmitting portion 11 which is illuminated upon reception of each of the illuminating lights L1 to L3 can be reduced as compared with the related art.

As described above, the present embodiment includes the front surface panel 10 including the light transmitting portion 11 extending along the virtual horizontal line P, a plurality of light sources 30 mounted (disposed) along the virtual horizontal line P on the circuit board 20 so as to supply the light transmitting portion 11 with illuminating light, the light guide member 40 disposed within the light path for the illuminating light going from each light source 30 to the light transmitting portion 11, and the case body 50 including the space portion 51 for accommodating each light sources 30 and the light guide member 40. The case body 50 includes the light dividing portion 55 which divides the first illuminating light L1 emitted in the vicinity of the optical axis of the light source 30 among the illuminating light emitted from the light guide member 40 into a plurality of directions along the virtual horizontal line P, and the first reflecting portion 56 for reflecting the second illuminating light L2 emitted in a region away from the optical axis of the light sources 30 among the illuminating light emitted from the light guide member 40 toward the light transmitting portion11. The light dividing portion 55 and the first reflecting portion 56 are disposed alternately along the virtual horizontal line P, and the light sources 30 are mounted (disposed) on the circuit board 20 so as to correspond to the light dividing portion 55. The second reflecting portion 57 for reflecting the third illuminating light L3 excluding the first and the second illuminating lights L1 and L2 among the illuminating light emitted from the light guide member 40 toward the light transmitting portion 11 is provided between the light dividing portion 55 and the first reflecting portion 56.

Therefore, the illuminating balance among the first light transmission region R1 which is illuminated in a state not including the light divided by the light dividing portion 55, the second light transmission region R2 which is illuminated in a state in which a light amount is compensated for by a part of the first illuminating light L1 reflected via the light dividing portion 55 and the first reflecting portion 56 described above and the second illuminating light L2 emitted by the region away from the optical axis of the light source 30, and the third light transmission region R3 which is illuminated by the third illuminating light L3 reflected via the second reflecting portion 57 is kept favorably. Therefore, occurrence of brightness variation in the light transmitting portion 11 can be reduced.

Although an example in which the light transmitting portion 11 is configured as a beltlike ambient illuminating display unit has been described in the present embodiment, the light transmitting portion 11 may be, for example, configured as a light emitting region (an illuminating display region) other than the ambient illuminating display unit.

The present invention is not limited by the above-described embodiment and the drawings. The embodiment and the drawings may be changed (including deletion of components) suitably without changing the scope of the present invention.

For example, although three portions, i.e., the light dividing portion 55, the first reflecting portion 56, and the second reflecting portion 57 are provided in the case body 50 to reduce occurrence of brightness variation in the light transmitting portion 11 in the embodiment described above, it is only necessary that at least the light dividing portion 55 and the first reflecting portion 56 are provided in the case body 50 among the three portions in the present invention. In the case where the light dividing portion 55 and the first reflecting portion 56 are provided in the case body 50, occurrence of brightness variation in the light transmitting portion 11 can be reduced as compared with the related art.

### INDUSTRIAL APPLICABILITY

The present invention is applicable to an on-vehicle light-emitting device which causes a light transmitting portion provided in a front surface panel to illuminate using a light guide member.

### DESCRIPTION OF REFERENCE NUMERALS

- 10...: Front surface panel
- 11...: Light transmitting portion
- 13...: Dark colored layer (dark colored portion)
- 20...: Circuit board
- 30...: Light source
- 40...: Light guide member
- 43...: Light emitting portion
- 50...: Case body
- 51...: Space portion
- 52...: Upper case portion
- 55...: Light dividing portion
- 56...: First reflecting portion
- 57...: Second reflecting portion
- L1...: First illuminating light
- L2...: Second illuminating light
- L3...: Third illuminating light
- P...: Virtual horizontal line (predetermined virtual line)
- R1...: First light transmission region
- R2...: Second light transmission region
- R3...: Third light transmission region
- T1...: Upper space portion
- T2...: Lower space portion
- T3...: Inclined space portion

## Claims

1. A light-emitting device comprising:
a front surface panel including a light transmitting portion extending along a predetermined virtual line;
a plurality of light sources disposed on a circuit board along the virtual line in order to supply the light transmitting portion with illuminating light;
a light guide member disposed within a light path for illuminating light going from the light sources to the light transmitting portion; and
a case body including a space portion for accommodating the light sources and the light guide member,
wherein the case body is provided with a light dividing portion that divides a first illuminating light emitted in the vicinity of an optical axis of the light source among illuminating light emitted from the light guide member into a plurality of directions along the virtual line, and a first reflecting portion for reflecting a second illuminating light emitted in a region away from the optical axis of the light source among the illuminating light emitted from the light guide member toward the light transmitting portion, and
wherein the light dividing portion and the first reflecting portion are disposed alternately along the virtual line, and the light sources are disposed on the circuit board so as to correspond to the light dividing portion.

2. The light-emitting device according to claim 1, wherein a second reflecting portion for reflecting third illuminating light that is illuminating light excluding the first and the second illuminating light from illuminating light emitted from the light guide member toward the light transmitting portion is provided between the light dividing portion and the first reflecting portion.
